# EUROPÄISCHE PATENTANMELDUNG

(11) **EP 2 793 188 A2**
(43) Veröffentlichungstag der Anmeldung: **22.10.2014**
(21) Anmeldenummer: 14163373.5
(22) Anmeldetag: 03.04.2014
(51) Int. Cl.: G06T 7/00

(54) **Verfahren und System zur Verarbeitung von MRT-Daten des menschlichen Gehirns**

(30) Priorität: 15.04.2013 DE 102013206644
(71) Anmelder: jung diagnostics GmbH, 20251 Hamburg (DE)
(72) Erfinder: SPIES, Lothar, 22337 Hamburg (DE)
(74) Vertreter: Seemann & Partner

(57) **Zusammenfassung**

Die Erfindung betrifft ein Verfahren, ein Softwareprogramm und ein System zur Verarbeitung von MRT-Daten des menschlichen Gehirns eines Patienten, wobei in Voxel aufgelöste dreidimensionale MRT-Daten des Patientengehirns und der Gehirne eines oder mehrerer statistisch unabhängiger Referenzkollektive vorliegen, wobei mittels eines Klassifizierungsalgorithmus die MRT-Daten des Patientengehirns segmentiert werden, indem für jedes Voxel ein Volumenanteil wenigstens einer Gewebeklasse bestimmt wird, eine oder mehrere normalisierte Gewebekarten gebildet werden, die den oder die vom Klassifizierungsalgorithmus ermittelten Volumenanteil oder Volumenanteile enthalten, indem die Daten in einen stereotaktischen Raum transformiert werden, und die wenigstens eine Gewebekarte des Patientengehirns einem voxelbasierten statistischen Vergleich mit den Daten des Referenzkollektivs unterzogen wird.

Erfindungsgemäß werden bei dem voxelbasierten statistischen Vergleich gewebespezifische individualisierte ROI-Cluster von aneinander angrenzenden Voxeln identifiziert, deren Voxel signifikant weniger Volumen aufweisen als die entsprechenden Voxel des Referenzkollektivs, wobei gewebespezifische ROI-Clustervolumen wenigstens eines individualisierten ROI-Clusters als Summe der Volumenanteile aller Voxel des ROI-Clusters der Gewebekarte des Patientengehirns einerseits und der Gewebekarte oder Gewebekarten eines Vergleichskollektivs andererseits gebildet und statistisch miteinander verglichen werden.

## Beschreibung

Die Erfindung betrifft ein Verfahren, ein Softwareprogramm und ein System zur Verarbeitung von MRT-Daten des menschlichen Gehirns eines Patienten, wobei in Voxel aufgelöste dreidimensionale MRT-Daten des Patientengehirns und der Gehirne eines oder mehrerer statistisch unabhängiger Referenzkollektive vorliegen, wobei mittels eines Klassifizierungsalgorithmus die MRT-Daten des Patientengehirns segmentiert werden, indem für jedes Voxel ein Volumenanteil wenigstens einer Gewebeklasse bestimmt wird, eine oder mehrere normalisierte Gewebekarten gebildet werden, die den oder die vom Klassifizierungsalgorithmus ermittelten Volumenanteil oder Volumenanteile enthalten, indem die Daten in einen stereotaktischen Raum transformiert werden, und die wenigstens eine Gewebekarte des Patientengehirns einem voxelbasierten statistischen Vergleich mit den Daten des Referenzkollektivs unterzogen wird.

Die Untersuchung von Magnetresonanztomographie-Daten (MRT) menschlicher Gehirne mit Degenerationserscheinungen, wie beispielsweise Läsionen oder lokalen Atrophien (Gewebeschwund), stellt ein wichtiges Werkzeug für die ärztliche Untersuchung menschlicher Gehirne dar. Entsprechende automatische oder halbautomatische Verfahren, die statistische Untersuchungen der dreidimensionalen MRT-Daten erlauben, sind bekannt. Ihre Ergebnisse geben dem diagnostizierenden Arzt Anhaltspunkte für seine Diagnose.

Bei entsprechenden automatischen oder teilweise automatischen rohdatenbasierten Untersuchungsverfahren werden verschiedene Ansätze verfolgt.

Ein erstes, beispielsweise bekanntes Verfahren besteht darin, eine voxelbasierte Morphometrie (VBM) des Gehirns des Patienten durchzuführen, beispielsweise gemäß J. Ashburner und K. J. Friston, "Voxel-Based Morphometry - The Methods", Neurolmage 11, 805-821 (2000). Bei der VBM werden die einzelnen Volumenelemente (Voxel) der MRT-Daten des Gehirns mittels eines Segmentierungs- bzw. Kategorisierungsalgorithmus in Konzentrations- oder Volumenanteile von grauer Masse bzw. Substanz (GM), weißer Masse bzw. Substanz (WM) und Gehirnflüssigkeit, auch Liquor oder CSF ("cerebrospinal fluid") genannt, aufgeteilt. Dabei werden die unterschiedlichen Signale, die diese verschiedenen Substanzen im Gehirn als Reaktion auf den MRT-Scan aussenden, dazu benutzt, die verschiedenen Stoffklassen zu unterscheiden. Typische Voxelgrößen moderner MRT-Scanner sind kubische oder rechteckigkubische Raumelemente mit ein bis zwei Millimeter Kantenlänge und einem Volumeninhalt von 1 bis 8 mm³. Es werden statistische parametrische Karten erstellt, um Voxel zu kennzeichnen, die sich statistisch signifikant von korrespondierenden Voxeln einer Gruppe oder Population von Referenz-Probanden unterscheiden. Dafür ist keine vorherige Kenntnis oder Definition interessierender Regionen des Gehirns (so genannte "regions of interest", ROI) erforderlich.

Die meisten bislang publizierten Studien verwenden voxelbasierte statistische Methoden, um Unterschiede zwischen verschiedenen Gruppen bzw. Populationen zu untersuchen, wie beispielsweise Populationen gesunder Probanden gegen Populationen von Patienten mit spezifischen Krankheitscharakteristika, um Muster zu finden, die als Kennzeichen der oder typisch für die Krankheit interpretiert werden können. Ein Beispiel hierfür ist I. C. Wright et al., "A Voxel-Based Method for the Statistical Analysis of Gray and White Matter Density Applied to Schizophrenia", Neurolmage 2, 244-252 (1995).

Unterschiedliche Bereiche des Gehirns sind von weißer Substanz oder von grauer Substanz dominiert. In diesen Bereichen führen Läsionen oder fokale Atrophien zu einer Abnahme der dominierenden Substanz, also jeweils der dominierenden weißen oder der dominierenden grauen Substanz. Das Konzept der voxelbasierten statistischen Analyse wurde auch auf diesen Fall der Läsionen ausgedehnt, vgl. S. Mehta et al., "Evaluation of voxel-based morphometry for focal lesion detection in individuals", Neurolmage 20, 1438-1454 (2003). Darin wurden von einem Experten manuell bestimmte Konturen als Vergleichsbasis (auch "ground truth", Grundwahrheit) verwendet. Mit der Grundwahrheit wird ein Verfahren hinsichtlich seiner Fähigkeit überprüft, die Konturen der Läsionen automatisch zu finden. Dabei wird nach einem Mangel oder einem Defizit an weißer und grauer Substanz gesucht.

Das Konzept der voxelbasierten statistischen Analyse wurde auch auf den unsymmetrischen Fall ausgedehnt, also den Vergleich eines einzelnen Probanden mit einer Kontrollgruppe, vgl. M. Mühlau et al., "Voxel-Based Morphometry in Individual Patients: A Pilot Study in Early Huntington Disease", Am. J. Neuroradiol. 30, 539-43 (2009).

Die voxelbasierte Untersuchung von Fokalmustern von Gewebeveränderungen oder -zerstörungen zwischen Populationen oder Gruppen von Probanden mit verschiedenen biologischen und pathologischen Merkmalen mit voxelbasierten statistischen Methoden, wie beispielsweise VBM, sind eine übliche Vorgehensweise. Selbst bei unsymmetrischen Designs, wenn ein einzelner Proband bzw. Patient statistisch mit einer Population von Probanden auf Voxel-Level verglichen wird, liefern diese Methoden konsistente Ergebnisse. Unter diesen Umständen muss allerdings den zugrunde liegenden statistischen Methoden und damit verbundenen Annahmen viel Aufmerksamkeit gewidmet werden.

In C. H. Salmond et al., "Distributional Assumptions in Voxel-Based Morphometry", Neurolmage 17, 1027-1030 (2002), wird in diesem Zusammenhang untersucht, welchen Einfluss Annahmen über die Verteilung der Fehler bei der VBM haben. So sollen die Modellfehlerterme normalverteilt sein, was durch Glättung der Daten sichergestellt wird. Dies steht allerdings im Widerspruch zu der Forderung, zur Steigerung der Auflösung möglichst wenig Glättung anzuwenden. Die Studie kommt zu dem Ergebnis, dass die VBM durch eine Nichtgleichverteilung der Fehler beeinträchtigt werden kann. Dies betrifft unbalancierte bzw. unsymmetrische Designs, also Vergleiche von Individuen mit Gruppen, mehr als balancierte Designs, in denen Gruppen miteinander verglichen werden.

Auch C. Scarpazza et al., "When the single matters more than the group: Very high false positive rates in single case Voxel Based Morphometry", Neurolmage 70, 175-188 (2013) fanden in einer Studie, dass bei Vergleichen von Individuen mit Gruppen hohe Raten an falschpositiven Befunden auftraten.

Ferner können Bildverzerrungen, wie beispielsweise räumliche Variationen von Bildintensitäten oder Variationen zwischen verschiedenen MRT-Scannern, einen größeren Einfluss auf der Voxel-Ebene haben und somit die statistische Analyse beeinflussen, vgl. Niels K. Focke et al., "Multi-site voxel-based morphometry - Not quite there yet", Neurolmage 56, 1164-1170 (2011). Als Gegenmaßnahmen müssen mehr Korrekturen und ein höherer Glättungsgrad eingesetzt werden. Dies beeinträchtigt die Robustheit und die Empfindlichkeit des Verfahrens, was seine Nützlichkeit in praktischen Anwendungen vermindert.

Eine andere Klasse von Untersuchungsverfahren sind so genannte "Region-Of-Interest" (ROI)-basierte statistische Analysen, wie beispielsweise voxelbasierte Volumetrie, vgl. ebenfalls die bereits genannte Referenz H.-J. Huppertz et al., Neurolmage 49, 2216-2224 (2010). Diese benötigen vordefinierte ROIs. Voxelintensitäten werden über die ROIs aufsummiert und anschließend mit den korrespondierenden ROIs einer Referenzdatenbasis verglichen. Aufgrund des Mittelungsprozesses, der vor dem statistischen Vergleich vorgenommen wird, sind diese Verfahren robuster gegen Bildverzerrungen als voxelbasierte Methoden wie VBM. ROI-basierte statistische Analysen funktionieren sowohl in symmetrischen als auch in unsymmetrischen Fällen, also Gruppe gegen Gruppe und Einzelproband gegen Gruppe, und wurden auch an Daten aus verschiedenen Geräten an verschiedenen Standorten bereits erfolgreich eingesetzt, vgl. H.-J. Huppertz et al. (2010), s. o.

Die zugrunde liegenden vordefinierten Regionen, so genannte a-priori-Regionen, können entweder für spezifische Krankheitsbilder oder aus einem menschlichen Hirnatlas gewonnen werden, insbesondere bezüglich anatomischer Hirnregionen, wie beispielsweise dem Gehirnlappen, oder Unterbereichen der Lappen, wie beispielsweise dem Hippocampus. Krankheitsspezifische Regionen können von einer voxel-basierten statistischen Analyse zwischen zwei Gruppen bzw. Populationen erlangt werden, wobei eine Population die Krankheit bzw. das Krankheitsbild aufweist und die andere diese Krankheit nicht aufweist. Der Gruppenvergleich kann dann räumliche Voxel-Karten aufweisen, deren Voxel die statistisch signifikanten Gewebeunterschiede zwischen diesen Gruppen enthalten bzw. dekodieren und die somit ein Kennzeichen der Erkrankung darstellen können. Diese spezifischen Regions-Of-Interest (ROIs) sind bereits für eine Vielzahl von Krankheiten bzw. Krankheitsverläufen identifiziert worden.

Nicht alle Krankheitsbilder äußern sich allerdings in Mustern mit wohldefinierten Positionen und Ausdehnungen. Insbesondere für Krankheiten, die die weiße Substanz betreffen, wie beispielsweise Traumata, Gefäßerkrankungen oder Schlaganfälle, hängen die Gewebeveränderungen vom individuellen Patienten und dem individuellen Krankheitsbild und Krankheitsverlauf ab. Wenn beispielsweise Patientendaten mit Gefäßerkrankungen gebündelt werden und statisch mit einer Gruppe von normalen Probanden verglichen werden, ergibt sich keine konsistente Region, die unabhängig vom selektierten Individuum ist, so dass auch keine Region als repräsentativ für die Krankheit erscheint.

In US 6 366 797 B1 ist ein Verfahren zur Analyse von medizinischen Daten, insbesondere MRT-Scans, offenbart. Ein Gehirnvolumen wird bestimmt, das liquor-gefüllte Regionen ausschließt. Das Gehirnvolumen wird normalisiert bezogen auf ein volles Konturvolumen, so dass eine parenchymale Fraktion des Gehirns generiert wird. Diese dient als Maß einer Gehirnatrophie und hilft bei der Bestimmung der Schwere und des Fortschritts von multipler Sklerose oder anderen Krankheitsbildern, die zu Neurodegeneration oder axonaler Schädigung führen.

US 8 112 144 B2 betrifft ein Verfahren zur Sichtbarmachung von cerebralen Atrophien. Dabei werden die Asymmetrien ausgenutzt, die durch cerebrale Atrophien, die einseitig auftreten, entstehen. Hierzu werden Verhältnisse von grauer Substanz und weißer Substanz in der linken und der entsprechenden rechten Gehirnhälfte miteinander verglichen und statistisch signifikante Unterschiede sichtbar gemacht.

Den vorgenannten Verfahren gelingt es, wenn überhaupt, nur in begrenztem Maße, Läsionen oder Atrophien des Gehirns kenntlich zu machen. Der Erfindung liegt demgegenüber die Aufgabe zugrunde, Gewebeveränderungen bei Individuen, insbesondere Läsionen, Atrophien und/oder krankheitssymptomatische Veränderungen, sicher und stabil erkennbar zu machen.

Diese Aufgabe wird durch ein Verfahren zur Verarbeitung von MRT-Daten des menschlichen Gehirns eines Patienten gelöst, wobei in Voxel aufgelöste dreidimensionale MRT-Daten des Patientengehirns und der Gehirne eines Referenzkollektivs oder mehrerer statistisch unabhängiger Referenzkollektive von mehreren menschlichen Individuen vorliegen, die gesund sind oder ein gemeinsames, insbesondere neurologisches oder psychiatrisches, Krankheitsbild aufweisen, wobei
- mittels eines Klassifizierungsalgorithmus die MRT-Daten des Patientengehirns segmentiert werden, indem für jedes Voxel ein Volumenanteil oder Volumenanteile einer oder mehrerer Gewebeklassen bestimmt wird oder werden,
- eine oder mehrere normalisierte Gewebekarten gebildet werden, die den oder die vom Klassifizierungsalgorithmus ermittelten Volumenanteil oder Volumenanteile enthalten, indem die Daten in einen standardisierten stereotaktischen Raum transformiert werden, wobei die Transformation vor, nach oder synchron mit der Segmentierung erfolgt, und
- wenigstens eine normalisierte Gewebekarte des Patientengehirns einem voxelbasierten statistischen Vergleich mit den entsprechend normalisierten und segmentierten Daten des Referenzkollektivs unterzogen wird,
   das dadurch weitergebildet ist, dass
- bei dem voxelbasierten statistischen Vergleich gewebespezifische individualisierte ROI-Cluster von aneinander angrenzenden Voxeln identifiziert werden, deren Voxel in der wenigstens einen normalisierten Gewebekarte des Patienten statistisch signifikant entweder weniger oder mehr Volumen aufweisen als die entsprechenden Voxel der entsprechenden normalisierten Gewebekarte oder Gewebekarten des Referenzkollektivs, und
- gewebespezifische ROI-Clustervolumen wenigstens eines individualisierten ROI-Clusters als Summe der Volumenanteile aller Voxel des ROI-Clusters der wenigstens einen normalisierten Gewebekarte des Patientengehirns einerseits und der entsprechenden normalisierten Gewebekarte oder Gewebekarten eines Vergleichskollektivs andererseits gebildet und statistisch miteinander verglichen werden.

Die Erfindung beruht auf dem Grundgedanken, dass mit dem erfindungsgemäßen Verfahren die Vorteile der voxelbasierten Morphometrie (VBM) mit den Vorteilen einer ROI-basierten Analyse kombiniert werden. Dabei wird die VBM zunächst verwendet, um individualisierte, also patientenspezifische ROI-Cluster zu identifizieren. Jedes einzelne Voxel dieser individualisierten ROI-Cluster unterliegt dabei den Schwankungen, die den VBM-basierten Analysen inhärent sind. Dies bedeutet vergleichsweise hohe Raten von falschpositiven und falschnegativen Resultaten auf Voxel-Ebene, sowie Beeinträchtigungen durch die Effekte von räumlichen Verzerrungen der Bildintensitäten, die zwischen dem Patienten und der Kontrollgruppe, und auch unter den Mitgliedern der Kontrollgruppe variieren können. Die erfindungsgemäß angewandte VBM wird daher auch vorzugsweise mit Korrekturen und Glättung vorgenommen.

Bei dem erfindungsgemäßen Verfahren liefert die VBM individualisierte ROI-Cluster. Anschließend wird jeweils die Summe der Intensitäten bzw. Volumenanteile aller Voxel des jeweiligen individuellen ROI-Clusters für einzelne Gewebekarten des Patientengehirns einerseits und eines Vergleichskollektivs andererseits gebildet und miteinander verglichen. Diese Summenbildung und der Vergleich finden für jede dreidimensionale Maske bzw. individualisierte ROI statt. Dafür wird für jedes individualisierte ROI das entsprechende Gewebevolumen, beispielsweise der weißen Substanz, berechnet, indem beispielsweise die binäre Maske der ROI mit der entsprechenden Gewebekarte multipliziert wird und die Voxel-Intensitäten aufsummiert werden. Diese Gewebevolumen werden statistisch mit dem entsprechenden Gewebevolumen der Referenzpopulation, d.h. des Vergleichskollektivs, verglichen. Das Vergleichskollektiv besteht, insbesondere ebenso wie das zunächst verwendete Referenzkollektiv, aus mehreren menschlichen Individuen, die gesund sind oder ein gemeinsames, insbesondere neurologisches oder psychiatrisches, Krankheitsbild aufweisen. Dieser zweite statistische Vergleich ist deutlich unempfindlicher als der erste gegen die Störungsfaktoren, die bei einer unsymmetrischen VBM zu einer hohen Rate von falschen Negativen und falschen Positiven führen.

Die individualisierten ROI-Cluster können neben den für fokale Atrophien typischen Verringerungen des jeweiligen Gewebevolumens auch für Cluster mit Voxeln mit erhöhtem Volumen gebildet werden. Solche Cluster mit erhöhtem gewebespezifischen Volumen treten beispielsweise auf bei Verdichtungen der grauen oder weißen Substanz, wie beispielsweise bei Tumoren oder Entzündungen des Gewebes.

Vorzugsweise wird das zum voxelbasierten statistischen Vergleich verwendete Referenzkollektiv oder ein anderes, statistisch unabhängiges Referenzkollektiv als Vergleichskollektiv verwendet. Die erste Alternative bietet den Vorteil des geringeren Aufwands, die zweite Alternative den Vorteil, dass statistische Zirkelschlüsse vermieden werden, die das Ergebnis beeinträchtigen könnten. Die beiden statistisch unabhängigen Referenzkollektive sollten einander ähnlich sein, was die Anzahl der Individuen in den Kollektiven, den Gesundheitszustand bzw. das gemeinsame Krankheitsbild, die Altersverteilung usw. angeht.

Vorzugsweise ist die wenigstens eine Gewebeklasse graue Materie, weiße Materie oder Liquor. Die entsprechenden Gewebekarten sind vorzugsweise rein, also "GM-Karten", "WM-Karten" und "Liquor-Karten".

Die Transformation in den standardisierten stereotaktischen Raum erfolgt vorteilhafterweise volumenerhaltend. Dies gilt für alle Transformationen, die im Rahmen des erfindungsgemäßen Verfahrens durchgeführt werden. Die Volumenerhaltung stellt sicher, dass der nachgelagerte statistische Vergleich auf der Basis makroskopischer Volumina korrekt ist.

Wenn vorteilhafterweise die normalisierten Gewebekarten für den voxelbasierten statistischen Vergleich geglättet werden und/oder für die Bildung der gewebespezifischen ROI-Clustervolumen die ungeglätteten normalisierten Gewebekarten verwendet werden, werden die für die VBM bzw. die volumetrischen Tests relevanten Teile des erfindungsgemäßen Verfahrens unterstützt. Die Glättung der Gewebekarten für den voxelbasierten Vergleich trägt dem Umstand Rechnung, dass die Transformation der Daten von individuellen Gehirnen in Gegenwart von Rauschen in den Daten fehleranfällig ist und zu Ungenauigkeiten führt, die die Voxelgröße übersteigen können. Mit einer Glättung wird dieser Effekt, der zu starken Abweichungssignalen führen würde, vermindert werden.

Die Verwendung ungeglätteter Gewebekarten für den ROI-basierten Vergleich sorgt hingegen dafür, dass die durch Summation bzw. Integration über die ROI-Clustervolumen errechneten gewebespezifischen Volumen auch tatsächlich den Volumen im individualisierten ROI-Cluster entsprechen, und nicht durch Glättung Anteile von außerhalb des ROI-Clusters enthalten. Gegebenenfalls kann allerdings im Rahmen der Erfindung auch eine andere, vorzugsweise schwächere, Glättung auf die Gewebekarten angewandt werden als bei dem voxelbasierten Vergleich.

Für den statistischen Vergleich der gewebespezifischen ROI-Clustervolumen wird vorzugsweise jeweils ein ROI-Clustervolumen des Patientengehirns mit einem Mittelwert und einer Standardabweichung der entsprechenden ROI-Clustervolumen des Vergleichskollektivs verglichen, insbesondere unter Verwendung weiterer, höherer Momente, oder es wird ein Ein-Stichproben t-Test durchgeführt, falls die Verteilung einer Normalverteilung entspricht. Mittelwert, Standardabweichung und gegebenenfalls höhere Momente der Verteilung der Werte des Vergleichskollektivs lassen sich einfach berechnen. Auch andere statistische Methoden sind an dieser Stelle anwendbar.

Vorzugsweise wird wenigstens ein gewebespezifisches ROI-Cluster-volumen in der Gewebekarte der weißen Substanz ermittelt. Damit werden besonders diejenigen Krankheitsbilder von dem Verfahren erfasst, die zu einer individuellen und nicht krankheitsbildcharakteristischen Schädigungssignatur führen, wie beispielsweise Gefäßerkrankungen, Traumata und Schlaganfälle. Die Anwendung auf die graue Substanz ist allerdings ebenso vorteilhaft möglich.

Um statistisch besonders aussagekräftige Ergebnisse zu erhalten, ist vorzugsweise vorgesehen, dass eine, insbesondere schädigungstypabhängig angepasste, Cluster-Mindestgröße bestimmt oder bestimmbar ist, wobei individualisierte ROI-Cluster, die die Cluster-Mindestgröße unterschreiten, verworfen werden. Zu kleine Cluster besitzen bei der Analyse eine geringere statistische Relevanz. Eine schädigungstypabhängige Anpassung der Cluster-Mindestgröße kann beispielsweise für Gefäßerkrankungen erfolgen. Minimale Clustergrößen sind, insbesondere im Fall von Gefäßerkrankungen, vorzugsweise 0,1 ml, ferner vorzugsweise 0,5 ml, insbesondere vorzugsweise 1 ml.

Vorzugsweise werden zusätzlich gewebespezifische ROI-Cluster-volumen in wenigstens einem vordefinierten (a-priori) ROI-Cluster in den entsprechenden ungeglätteten Gewebekarten des Patienten und des Referenzkollektivs gebildet und statistisch miteinander verglichen. Damit kann das erfindungsgemäße Verfahren auch mit dem bekannten ROI-basierten Analyseverfahren kombiniert werden, bei dem bereits bekannte krankheitssymptomatische ROIs für bestimmte Krankheitsbilder oder bekannte Hirnregionen verwendet werden.

In einer vorteilhaften Weiterbildung wird für individualisierte ROI-Cluster oder vordefinierte (a-priori) ROI-Cluster, die eine vorbestimmte oder vorbestimmbare Größe überschreiten, der ROI-Cluster in kleinere ROI-Teilcluster aufgeteilt und werden gewebespezifische ROI-Teilclustervolumen als Summe der Volumenanteile aller Voxel der ROI-Teilcluster der ungeglätteten Gewebekarte des Patientengehirn einerseits und der ungeglätteten Gewebekarte des Referenzkollektivs andererseits gebildet und statistisch miteinander verglichen. Damit wird vermieden, dass mittelgroße oder kleinere volumetrisch signifikante Unterregionen in einem größeren ROI-Cluster bei der volumetrischen Analyse deshalb übersehen werden, weil sie durch einen größeren Teil des großen ROI-Clusters statistisch überdeckt werden, der volumetrisch unauffällig ist. ROI-Cluster, bei denen eine Aufspaltung in Teilcluster vorteilhaft ist, haben eine Clustergröße von mehr als etwa 5%, insbesondere mehr als 10%, insbesondere mehr als 20% des intracraniellen Volumens. Die Teilcluster haben vorteilhafterweise eine Größe von 1 bis 20 ml, vorzugsweise 2 bis 10 ml. Die Teilclustergröße ist danach zu bestimmen, dass eine ausreichende statistische Signifikanz der volumetrischen Analyse gesichert bleibt. Ebenfalls sind krankheitssymptomatische Gegebenheiten wie beispielsweise typische Schädigungsgrößen und -formen zu berücksichtigen.

Vorzugsweise wird das oder werden das oder die gewebespezifische(n) ROI-Clustervolumen und/oder ROI-Teilclustervolumen hinsichtlich eines Kovariats oder mehrerer Kovariate, insbesondere Kopfgröße, Alter, Erkrankungsdauer und/oder Geschlecht, an die individuellen Daten des Patienten mittels einer Korrektur angepasst und/oder gegen die gesamte Hirnsubstanz, die gesamte weiße oder graue Substanz oder das gesamte intrakranielle Volumen normiert, wobei insbesondere die normierten Volumina alterskorrigiert werden. Damit wird berücksichtigt, dass sich die individuell unterschiedlichen Gehirne von Probanden innerhalb statistischer Bandbreiten bewegen, die von Kopfgröße, Alter, Geschlecht und gegebenenfalls Erkrankungsdauer abhängen. Auch die Normierung gegen die gesamte weiße oder graue Substanz oder das gesamte intrakranielle Volumen führt zu einer Verbesserung der Einschätzung der statistischen Signifikanz eines Befunds der erfindungsgemäßen Analyse.

Vorteilhafterweise werden die Gewebekarten des Patienten und des Referenzkollektivs in gleicher Weise vorbereitet, insbesondere mit gleichem Klassifizierungsalgorithmus, gleichen Klassifizierungsparametern, gleicher Transformation und/oder gleichen Glättungsparametern. Auf diese Weise ist eine volle Vergleichbarkeit der Gewebekarten des Patienten und des Referenzkollektivs gewährleistet.

Die der Erfindung zugrunde liegende Aufgabe wird auch durch ein Softwareprogramm mit Programmcodemitteln zur Verarbeitung von MRT-Daten des menschlichen Gehirns eines Patienten gelöst, wobei in Voxel aufgelöste dreidimensionale MRT-Daten des Patientengehirns und der Gehirne eines Referenzkollektivs von mehreren menschlichen Individuen vorliegen, die gesund sind oder ein gemeinsames neurologisches oder psychiatrisches Krankheitsbild aufweisen, bei dessen Ausführung wenigstens die Schritte der Identifikation des wenigstens einen individualisierten ROI-Clusters und der gewebespezifischen ROI-Clustervolumen und des statistischen Vergleichs des ROI-Clustervolumens des Patienten mit dem des Referenzkollektivs des zuvor beschriebenen erfindungsgemäßen Verfahrens durchgeführt wird.

In dem Softwareprogramm ist oder sind zusätzlich vorzugsweise ein Klassifizierungsalgorithmus, ein Normalisierungsalgorithmus und/ oder ein Glättungsalgorithmus implementiert. Damit ist das Softwareprogramm ausgerüstet, sowohl die VBM-basierten Verfahrensschritte als auch die ROI-basierten Verfahrensschritte des erfindungsgemäßen Verfahrens auszuführen.

Schließlich wird die der Erfindung zugrunde liegende Aufgabe auch durch ein System zur Verarbeitung von MRT-Daten des menschlichen Gehirns eines Patienten, wobei in Voxel aufgelöste dreidimensionale MRT-Daten des Patientengehirns und der Gehirne eines Referenzkollektivs von mehreren menschlichen Individuen vorliegen, die gesund sind oder ein gemeinsames neurologisches oder psychiatrisches Krankheitsbild aufweisen, mit einer Datenverarbeitungsanlage, die einen Speicher für die MRT-Daten des Patientengehirns und des Referenzkollektivs und für Gewebekarten aufweist, gelöst, auf dem ein zuvor beschriebenes erfindungsgemäßes Softwareprogramm geladen ist.

Im Rahmen der vorliegenden Beschreibung kennzeichnet die Formulierung "insbesondere" jeweils fakultative Merkmale.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1a - 1d: Gewebekarten und Gesamtvolumina der grauen und weißen Substanz eines Patienten im Vergleich mit einem Referenzkollektiv,
- Fig. 2: Regionen in axialer Ansicht eines Patienten, die auf Voxelebene signifikant vom Referenzkollektiv abweichen,
- Fig. 3: Regionen in axialer Ansicht eines Patienten, die zusätzlich volumetrisch signifikant vom Referenzkollektiv abweichen,
- Fig. 4a, 4b: vergrößerte Ansichten der signifikant und volumetrisch auffälligen Regionen in einer charakteristischen Schicht und
- Fig. 5: relatives Volumen der volumetrisch auffälligen individualisierten ROI des Patienten im Vergleich mit den relativen Volumina der entsprechenden Regionen des Referenzkollektivs.

Im Folgenden wird für einen Patienten mit fokaler Atrophie das erfindungsgemäße Verfahren beispielhaft erläutert. Hierzu wurden Bilderdatensätze des Patienten und von Probanden einer gesunden Kontrollgruppe von 28 Probanden im Alter zwischen ca. 22 und ca. 62 Jahren segmentiert und normalisiert unter Verwendung des vereinheitlichten Segmentierungsalgorithmus von J. Ashburner und K. J. Friston, "Unified Segmentation", Neurolmage 26, 839-851 (2005), das im SPMB-Softwarepaket (Ausgabe April 2009; Wellcome Trust Center for Neuroimaging, London, UK) implementiert ist. Die Resultate des vereinheitlichten Segmentierungsalgorithmus hängen von den zugrunde gelegten Gewebewahrscheinlichkeitskarten ("Tissue Probability Maps", TPMs) für graue Substanz, weiße Substanz und Liquor ab, die den Segmentationsprozess unterstützen, indem sie Vorabinformationen über die Gewebezusammensetzung eines normalen Gehirns liefern.

TPMs wurden eingesetzt, die von einer Population von 662 gesunden älteren Probanden im Altersbereich zwischen 63 und 75 Jahren stammten, vgl. H. Lemäitre et al., "Age- and sex-related effects on the neuroanatomy of healthy elderly", Neurolmage 26, 900-911 (2005). Die TPMs haben eine isotrope Auflösung von einem Millimeter. Es wurden die Standardwerte für einen Segmentierungsalgorithmus verwendet, der Normalisierung und Klassifikation miteinander verbindet. Eine Mischung aus Gaußschen Verteilungen wurde verwendet, um Intensitätsverteilungen von grauer Substanz, weißer Substanz, Liquor und Rest zu modellieren. Die Anzahl der Gaußschen Verteilungen betrug hierfür 2, 2, 2 und 4. Weitere Parameter beinhalteten 25 mm für den Cut-Off von dreidimensionalen diskreten Kosinustransformationsbasisfunktionen für räumliche Krümmung, sehr leichte Regularisierung (0,0001) und 60 mm Breite für die Gaußsche Glättung des systematischen Intensitätsfehlerfeldes.

Der vereinheitlichte Segmentierungsalgorithmus erzeugte Gewebekarten für graue Substanz, weiße Substanz und Liquor im standardisierten stereotaktischen MNI-Raum des Montreal Neurological Institute. Durch eine volumenerhaltende Transformation in den MNI-Raum können auch Voxelwerte größer als 1 vorkommen. Sie repräsentieren die Volumen der entsprechenden Gewebearten in dem jeweiligen Voxel.

Die Gewebekarten der weißen Substanz wurden anschließend mit einem Gaußfilter geglättet, der eine isotrope FWHM (Full Width Half Maximum) von 8 mm hatte, und anschließend dem voxelbasierten statistischen Test unterworfen. Dazu wurde ein sogenannter Zwei-Stichproben t-Test gemäß Mühlau et al., (2009), s.o., zwischen dem Einzelprobanden und der Kontrollgruppe durchgeführt. Dabei wurde ein Testdesign verwendet, das anschlägt, wenn eine Voxelintensität in dem Einzelprobanden signifikant kleiner ist als die korrespondierende mittlere Voxelintensität der Kontrollgruppe. Das Alter und das totale intrakranielle Volumen (TIV) wurden als Kovariate verwendet. Das TIV ist als Summe der Volumina von grauer Substanz, weißer Substanz und Liquor definiert.

Der Test ergab statistische parametrische Karten mit den gleichen Dimensionen und Voxelvolumen wie die zugrunde liegenden Gewebekarten. Der Grenzwert für den p-Wert des t-Tests wurde auf 0,005 gesetzt. Es wurde keine Korrektur für Mehrfachvergleiche eingesetzt. Stattdessen wurde eine untere Grenze auf die Größe der gefundenen Cluster mit signifikanten Befunden gesetzt und Cluster unterhalb des Grenzvolumens verworfen.

Das Grenzvolumen kann an den Krankheitsprozess angepasst werden. So wird das Grenzvolumen bei fokaler Atrophie aus Gefäßerkrankungen auf 0,1 ml gesetzt, da bei diesen Erkrankungen fokale Atrophien von mehr als 0,1 ml von Interesse sind.

Zur Identifikation von individualisierten ROIs wurde ein Verfahren gemäß L. Thurfjell et al., "A New Three-Dimensional Connected Components Labeling Algorithm with Simultaneous Object Feature Extraction Capability", Graphical Models and Image Processing, Vol. 54, No. 4, Juli, Seiten 357-364, 1992, angewandt. Ein individualisiertes ROI wurde durch die Gesamtheit der Voxel definiert, die t-Werte oberhalb eines Grenzwerts aufweisen, der durch eine Signifikanzschwelle von p=0,005 gesetzt ist und die miteinander an wenigstens einer Ecke verbunden sind oder anstoßen.

Voxelwerte für die ungeglätteten Gewebekarten für die weiße Substanz, die innerhalb der individualisierten ROIs lagen, wurden für den einzelnen Patienten bzw. Probanden einerseits und für alle Probanden der Kontrollpopulation einzeln andererseits aufsummiert. Diese zu den individualisierten ROIs zugeordneten Volumen wurden statistisch miteinander verglichen.

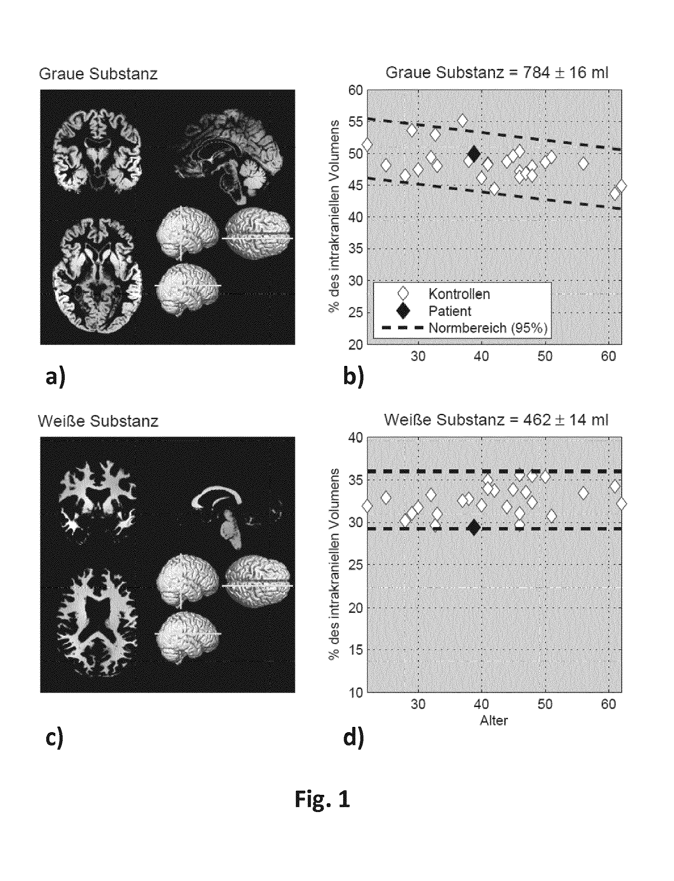

In Fig. 1 ist in den Figuren 1a) und 1c) für einen Patienten jeweils eine ungeglättete Gewebekarte für die graue Substanz (Fig. 1a) und die weiße Substanz (Fig. 1c) dargestellt, und zwar jeweils in einem Frontalschnitt (links oben), einem Sagittalschnitt (rechts oben) und einem Transversalschnitt (links unten) entsprechend den Linien in den drei Ansichten des modellhaften Gehirns in der rechten unteren Ecke der Darstellung.

In den Figuren 1b) und 1d) sind jeweils die Gesamtvolumina der grauen bzw. der weißen Substanz des Patienten als schwarzes Symbol im Vergleich mit den individuellen Daten der Mitglieder des Referenzkollektivs (weiße Symbole) dargestellt. Außerdem sind die Normbereiche in Abhängigkeit des Alters dargestellt. In beiden Fällen liegt das Gesamtvolumen der grauen Substanz des Patienten innerhalb bzw. am Rande, aber immer noch innerhalb des Normbereichs. Damit ist das Gesamtvolumen auch der weißen Substanz (Fig. 1d) im unteren Grenzbereich aber noch nicht auffällig.

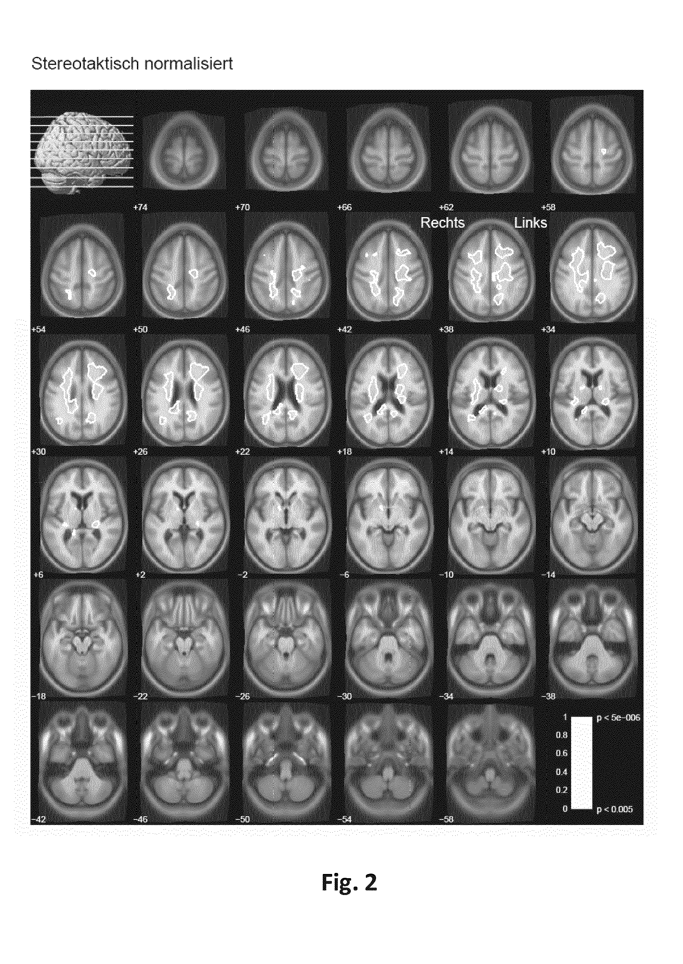

In Fig. 2 ist eine typische Abfolge von transversalen Schnitten durch das Gehirn des Patienten für die geglättete Gewebekarte für die weiße Substanz dargestellt. Die Lage der Schnitte ist in dem Bildausschnitt links oben gezeigt. Gehirn und Schnitte sind stereotaktisch normalisiert. Mit weißen Umrissen sind die Regionen markiert, die in der voxelbasierten Testung signifikant vom Referenzkollektiv abweichen. Besonders im z-Bereich zwischen +6 mm und +54 mm findet sich eine Vielzahl von Kandidaten.

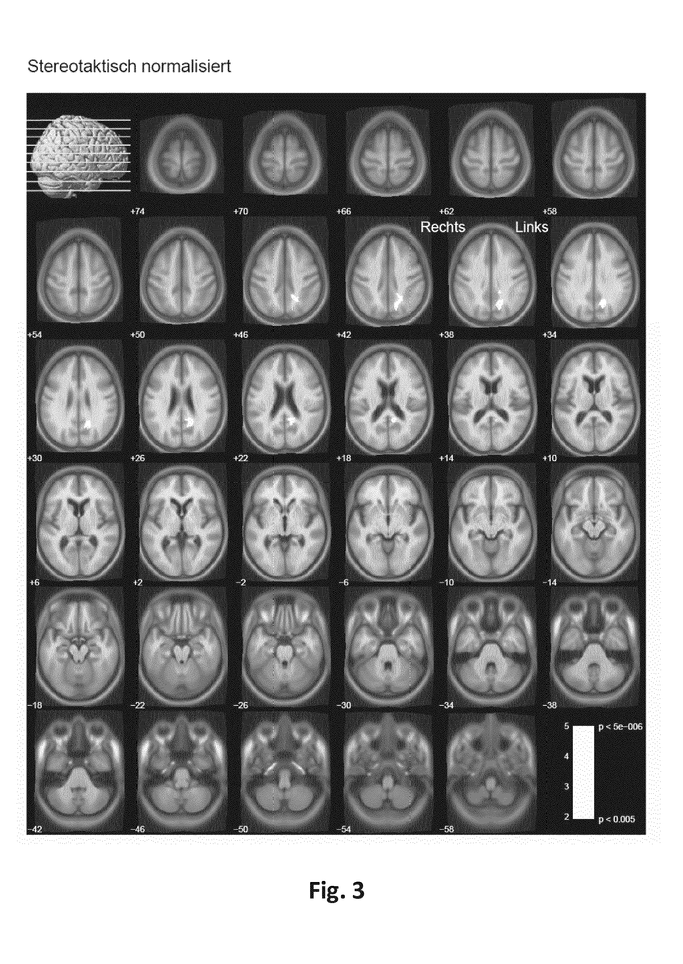

In Fig. 3 ist für die gleichen Schnitte wie in Fig. 2 anhand der gleichen geglätteten Gewebekarte für die weiße Substanz des Patienten mit weißen Umrissen gekennzeichnet, wo die weiße Substanz volumetrisch signifikant vom Referenzkollektiv abweicht. Dies ist das Resultat des zweiten Teils des erfindungsgemäßen Verfahrens, bei dem in den individualisierten ROIs, die in Fig. 2 gekennzeichnet sind, über die Volumenanteile der weißen Substanz summiert wird und diese Summen mit dem Referenzkollektiv verglichen werden. Hierbei zeigt sich, dass nicht alle identifizierten individualisierten ROIs aus Fig. 2 auch volumetrisch signifikant vom Referenzkollektiv abweichen.

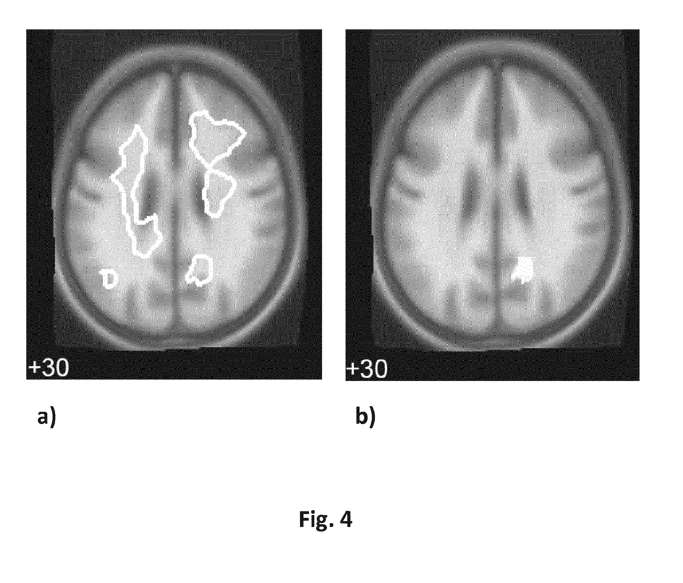

In Fig. 4 ist für eine charakteristische Schicht bei z = +30 die geglättete Gewebekarte der weißen Substanz in Bezug auf die in der VBM gefundenen individualisierten ROIs (Fig. 4a) und die demgegenüber gewonnenen volumetrisch auffälligen Regionen (Fig. 4b) gegenübergestellt. Die größeren individualisierten ROIs im vorderen Bereich sowie im rechten Gehirnbereich (in der Darstellung links) sind volumetrisch nicht auffällig. Eine individualisierte ROI im hinteren linken Bereich bleibt als volumetrisch auffällige Region übrig.

In den Fig. 2 bis 4 sind jeweils die Ergebnisse des voxelbasierten statistischen Vergleichs zur Illustration als Konturen auf Hintergrundbilder gelegt worden, die einem stereotaktischen Atlas entstammen, der eine standardisierte Anatomie eines normalen Patienten enthält.

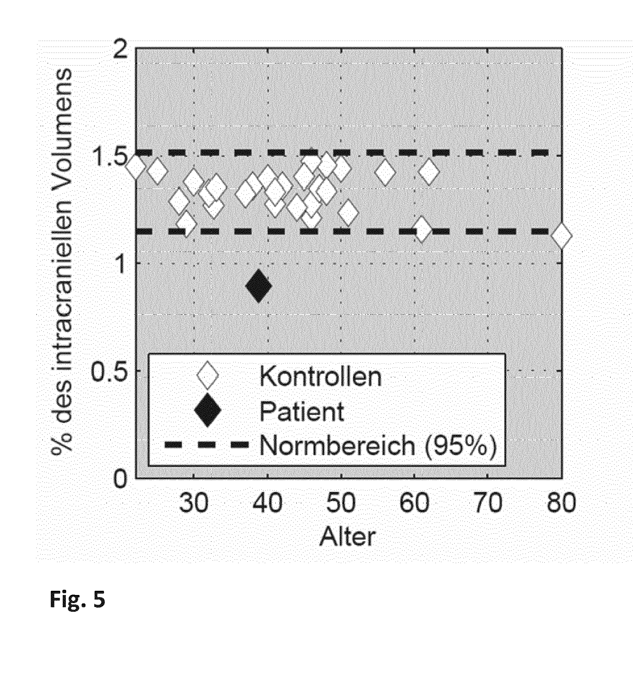

In Fig. 5 ist das relative Volumen der in Fig. 3 und Fig. 4b) gezeigten volumetrisch auffälligen Region des Patienten als prozentualer Anteil des intracraniellen Volumens als schwarzes Symbol im Vergleich mit den relativen Volumina der entsprechenden Region in den Gewebekarten der Mitglieder des Referenzkollektivs als weiße Symbole zusammen mit den Begrenzungen des Normbereichs des 95%-Konfidenzintervalls gezeigt. Die Volumen wurden aus den ungeglätteten Gewebekarten für die weiße Substanz berechnet. Die Werte des Kontrollkollektivs sind für den betrachteten Altersbereich wenig altersabhängig. Im Kontrollkollektiv nimmt die weiße Substanz in diesem individualisierten ROI etwa 1,2 bis 1,5% des intrakraniellen Volumens ein, während dies bei dem Patienten weniger als 1% ist. Dieser weicht signifikant vom Referenzkollektiv ab. Hier ist eine Schädigung als sicher anzunehmen.

Somit haben sich mehrere der individualisierten ROIs aus der VBM als falschpositiv herausgestellt, was durch das erfindungsgemäße Verfahren festgestellt und ausgeschlossen wurde. Somit kann in dem VBM-Teil des Verfahrens beispielsweise die Schwelle der Signifikanz relativ gering eingestellt werden, um die Anzahl der falschnegativen Befunde zu minimieren, was notwendigerweise zu einer Erhöhung der Anzahl der falschpositiven führt. Diese werden durch den zweiten Teil, die ROI-basierte Analyse, allerdings erkannt und minimiert. Auf diese Weise wird eine sichere Erkennung von fokalen Atrophien erreicht.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

## Patentansprüche

1. Verfahren zur Verarbeitung von MRT-Daten des menschlichen Gehirns eines Patienten, wobei in Voxel aufgelöste dreidimensionale MRT-Daten des Patientengehirns und der Gehirne eines Referenzkollektivs oder mehrerer statistisch unabhängiger Referenzkollektive von mehreren menschlichen Individuen vorliegen, die gesund sind oder ein gemeinsames, insbesondere neurologisches oder psychiatrisches, Krankheitsbild aufweisen, wobei
- mittels eines Klassifizierungsalgorithmus die MRT-Daten des Patientengehirns segmentiert werden, indem für jedes Voxel ein Volumenanteil oder Volumenanteile einer oder mehrerer Gewebeklassen bestimmt wird oder werden,
- eine oder mehrere normalisierte Gewebekarten gebildet werden, die den oder die vom Klassifizierungsalgorithmus ermittelten Volumenanteil oder Volumenanteile enthalten, indem die Daten in einen standardisierten stereotaktischen Raum transformiert werden, wobei die Transformation vor, nach oder synchron mit der Segmentierung erfolgt, und
- wenigstens eine normalisierte Gewebekarte des Patientengehirns einem voxelbasierten statistischen Vergleich mit den entsprechend normalisierten und segmentierten Daten des Referenzkollektivs unterzogen wird,
**dadurch gekennzeichnet, dass**
- bei dem voxelbasierten statistischen Vergleich gewebespezifische individualisierte ROI-Cluster von aneinander angrenzenden Voxeln identifiziert werden, deren Voxel in der wenigstens einen normalisierten Gewebekarte des Patienten statistisch signifikant entweder weniger oder mehr Volumen aufweisen als die entsprechenden Voxel der entsprechenden normalisierten Gewebekarte oder Gewebekarten des Referenzkollektivs, und
- gewebespezifische ROI-Clustervolumen wenigstens eines individualisierten ROI-Clusters als Summe der Volumenanteile aller Voxel des ROI-Clusters der wenigstens einen normalisierten Gewebekarte des Patientengehirns einerseits und der entsprechenden normalisierten Gewebekarte oder Gewebekarten eines Vergleichskollektivs andererseits gebildet und statistisch miteinander verglichen werden.

2. Verfahren nach Anspruch 1, **dadurch gekennzeichnet, dass** das zum voxelbasierten statistischen Vergleich verwendete Referenzkollektiv oder ein anderes, statistisch unabhängiges Referenzkollektiv als Vergleichskollektiv verwendet wird.

3. Verfahren nach Anspruch 1 oder 2, **dadurch gekennzeichnet, dass** die wenigstens eine Gewebeklasse graue Materie, weiße Materie oder Liquor ist.

4. Verfahren nach einem der Ansprüche 1 bis 3, **dadurch gekennzeichnet, dass** die Transformation in den standardisierten stereotaktischen Raum volumenerhaltend erfolgt.

5. Verfahren nach einem der Ansprüche 1 bis 4, **dadurch gekennzeichnet, dass** die normalisierten Gewebekarten für den voxelbasierten statistischen Vergleich geglättet werden und/oder, dass für die Bildung der gewebespezifischen ROI-Clustervolumen die ungeglätteten normalisierten Gewebekarten verwendet werden.

6. Verfahren nach einem der Ansprüche 1 bis 5, **dadurch gekennzeichnet, dass** für den statistischen Vergleich der gewebespezifischen ROI-Clustervolumen jeweils ein ROI-Clustervolumen des Patientengehirns mit einem Mittelwert und einer Standardabweichung der entsprechenden ROI-Clustervolumen des Vergleichskollektivs verglichen wird, insbesondere unter Verwendung weiterer, höherer Momente, oder ein Ein-Stichproben t-Test durchgeführt wird.

7. Verfahren nach einem der Ansprüche 1 bis 6, **dadurch gekennzeichnet, dass** wenigstens ein gewebespezifisches ROI-Clustervolumen in der Gewebekarte der weißen Substanz ermittelt wird.

8. Verfahren nach einem der Ansprüche 1 bis 7, **dadurch gekennzeichnet, dass** eine, insbesondere schädigungstypabhängig angepasste, Cluster-Mindestgröße bestimmt oder bestimmbar ist, wobei individualisierte ROI-Cluster, die die Cluster-Mindestgröße unterschreiten, verworfen werden.

9. Verfahren nach einem der Ansprüche 1 bis 8, **dadurch gekennzeichnet, dass** zusätzlich gewebespezifische ROI-Clustervolumen in wenigstens einem vordefinierten ROI-Cluster in den entsprechenden ungeglätteten Gewebekarten des Patienten und des Referenzkollektivs gebildet und statistisch miteinander verglichen werden.

10. Verfahren nach einem der Ansprüche 1 bis 9, **dadurch gekennzeichnet, dass** für individualisierte ROI-Cluster oder vordefinierte ROI-Cluster, die eine vorbestimmte oder vorbestimmbare Größe überschreiten, der ROI-Cluster in kleinere ROI-Teilcluster aufgeteilt wird und gewebespezifische ROI-Teilclustervolumen als Summe der Volumenanteile aller Voxel der ROI-Teilcluster der ungeglätteten Gewebekarte des Patientengehirns einerseits und der ungeglätteten Gewebekarte des Referenzkollektivs andererseits gebildet und statistisch miteinander verglichen werden.

11. Verfahren nach einem der Ansprüche 1 bis 10, **dadurch gekennzeichnet, dass** das oder die gewebespezifische(n) ROI-Clustervolumen und/oder ROI-Teilclustervolumen hinsichtlich eines Kovariats oder mehrerer Kovariate, insbesondere Kopfgröße, Alter, Erkrankungsdauer und/oder Geschlecht, an die individuellen Daten des Patienten mittels einer Korrektur angepasst wird oder werden und/oder gegen die gesamte Hirnsubstanz, die gesamte weiße oder graue Substanz oder das gesamte intrakranielle Volumen normiert werden, wobei insbesondere die normierten Volumina alterskorrigiert werden.

12. Verfahren nach einem der Ansprüche 1 bis 11, **dadurch gekennzeichnet, dass** die Gewebekarten des Patienten und des Referenzkollektivs in gleicher Weise vorbereitet werden, insbesondere mit gleichem Klassifizierungsalgorithmus, gleichen Klassifizierungsparametern, gleicher Transformation und/oder gleichen Glättungsparametern.

13. Softwareprogramm mit Programmcodemitteln zur Verarbeitung von MRT-Daten des menschlichen Gehirns eines Patienten, wobei in Voxel aufgelöste dreidimensionale MRT-Daten des Patientengehirns und der Gehirne eines Referenzkollektivs von mehreren menschlichen Individuen vorliegen, die gesund sind oder ein gemeinsames neurologisches oder psychiatries Krankheitsbild aufweisen, bei dessen Ausführung wenigstens die Schritte der Identifikation des wenigstens einen individualisierten ROI-Clusters und der gewebespezifischen ROI-Clustervolumen und des statistischen Vergleichs des ROI-Clustervolumens des Patienten mit dem des Referenzkollektivs des Verfahrens nach einem der Ansprüche 1 bis 12 durchgeführt werden.

14. Softwareprogramm nach Anspruch 13, **dadurch gekennzeichnet, dass** zusätzlich ein Klassifizierungsalgorithmus, ein Normalisierungsalgorithmus und/oder ein Glättungsalgorithmus implementiert ist oder sind.

15. System zur Verarbeitung von MRT-Daten des menschlichen Gehirns eines Patienten, wobei in Voxel aufgelöste dreidimensionale MRT-Daten des Patientengehirns und der Gehirne eines Referenzkollektivs von mehreren menschlichen Individuen vorliegen, die gesund sind oder ein gemeinsames neurologisches oder psychiatries Krankheitsbild aufweisen, mit einer Datenverarbeitungsanlage, die einen Speicher für die MRT-Daten des Patientengehirns und des Referenzkollektivs und für Gewebekarten aufweist, auf dem ein Softwareprogramm nach Anspruch 13 oder 14 geladen ist.
